(19) Europäisches Patentamt / European Patent Office / Office européen des brevets

(11) **EP 4 629 142 B1**

(12) **EUROPEAN PATENT SPECIFICATION**

(45) Date of publication and mention
of the grant of the patent:
**29.07.2026  Bulletin 2026/31**

(51) International Patent Classification (IPC):
**G06N 10/40** *(2022.01)*

(52) Cooperative Patent Classification (CPC):
**G06N 10/40**

(21) Application number: **25167369.5**

(22) Date of filing: **31.03.2025**

(54) **ARRANGEMENT FOR QUBIT RESET**

ANORDNUNG ZUR QUBIT-RÜCKSETZUNG

AGENCEMENT DE RÉINITIALISATION DE BITS QUANTIQUES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **04.04.2024  FI 20245400**

(43) Date of publication of application:
**08.10.2025  Bulletin 2025/41**

(73) Proprietor: **IQM Finland Oy
02150 Espoo (FI)**

(72) Inventors:
• **Rönkkö, Jami**
  02150 Espoo (FI)
• **Sevriuk, Vasilii**
  02150 Espoo (FI)
• **Mäkinen, Akseli**
  02150 Espoo (FI)
• **Tuorila, Jani**
  02150 Espoo (FI)

(74) Representative: **Papula Oy**
  P.O. Box 981
  00101 Helsinki (FI)

(56) References cited:
**WO-A1-2023/247823**

• W. TEIXEIRA ET AL.: "Many-excitation removal
of a transmon qubit using a single-junction
quantum-circuit refrigerator and a two-tone
microwave drive", ARXIV.ORG:2401.14912, 26
January 2024 (2024-01-26), pages 1 - 13,
XP093271567
• S. ZEYTINOGLU ET AL.: "Microwave-induced
amplitude- and phase-tunable qubit-resonator
coupling in circuit quantum electrodynamics",
PHYSICAL REVIEW A (ATOMIC, MOLECULAR,
AND OPTICAL PHYSICS), vol. 91, no. 4, 30 April
2015 (2015-04-30), USA, XP093289595, ISSN:
1050-2947, DOI: 10.1103/PhysRevA.91.043846
• D. J. EGGER ET AL.: "Pulsed reset protocol for
fixed-frequency superconducting qubits",
ARXIV.ORG:1802.08980, 25 February 2018
(2018-02-25), XP081212479
• Y. SUNADA ET AL.: "Fast Readout and Reset of a
Superconducting Qubit Coupled to a Resonator
with an Intrinsic Purcell Filter", PHYSICAL
REVIEW APPLIED, vol. 17, no. 4, 8 April 2022
(2022-04-08), XP093269895, ISSN: 2331-7019,
DOI: 10.1103/PhysRevApplied.17.044016

## Description

### TECHNICAL FIELD

The present disclosure relates to a quantum computing, and more particularly to an arrangement for qubit reset and to a quantum computing system.

### BACKGROUND

In quantum computing, it is often necessary to initialize qubits into known quantum states, such as the ground state. This may be referred to as resetting the qubit. The ability to reset qubits fast and with high fidelity is one of the prerequisites for coherent quantum computation.

Document W. Teixeira et al., 'Many-excitation removal of a transmon qubit using a single-junction quantum-circuit refrigerator and a two-tone microwave drive', arXiv:2401.14912v1 (2024), discloses an arrangement for the reset of a superconducting quantum device, comprising a transmon qubit coupled to an auxiliary resonator and a quantum-circuit refrigerator (QCR). To perform the qubit reset, the arrangement uses a two-tone microwave drive where the frequencies of the two tones are calibrated to be resonant with the e-f and f0-g1 transitions of the transmon-auxiliary-resonator system. However, this document does not disclose a signal source configured to perform a qubit reset by providing a driving signal whose frequency substantially corresponds to an energy difference between the lowest excited state of the qubit and the two-photon state of the quantum system.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an objective to provide an arrangement for qubit reset and a quantum computing system. The foregoing and other objectives are achieved by the features of the independent claims. Further implementation forms are apparent from the dependent claims, the description and the figures.

According to a first aspect, an arrangement for qubit reset comprises: a qubit comprising at least a ground state and a lowest excited state; a quantum system coupled to the qubit and comprising a plurality of quantum states comprising at least a zero-photon state and a two-photon state; and a signal source coupled to the qubit and configured perform a qubit reset by providing a driving signal to the qubit, characterized in that a frequency of the driving signal substantially corresponds to an energy difference between the lowest excited state of the qubit and the two-photon state of the quantum system.

In an implementation form of the first aspect, the driving signal is configured to cause photon population transition from the lowest excited state of the qubit to the two-photon state of the quantum system.

In another implementation form of the first aspect, the quantum system further comprises a Purcell filter configured to suppress photon population transition from the lowest excited state of the qubit to states of the quantum system other than the two-photon state.

In another implementation form of the first aspect, the quantum system comprises a substantially harmonic oscillator, a harmonic oscillator, a substantially anharmonic oscillator, or an anharmonic oscillator.

In another implementation form of the first aspect, the energy difference between the lowest excited state of the qubit and the two-photon state of the quantum system corresponds to a first frequency $\omega_0$, the frequency of the driving signal is $\omega_d$, a coupling strength between the qubit and the quantum system is $g$, and $|\omega_0 - \omega_d| \leq g$, $|\omega_0 - \omega_d| < g$, and/or $10 \times |\omega_0 - \omega_d| < g$.

In another implementation form of the first aspect, the quantum system comprises a lumped-element LC oscillator, a distributed-element LC oscillator, a waveguide resonator, a coplanar waveguide resonator, a half-wavelength resonator, a quarter-wavelength resonator, and/or a three-dimensional cavity resonator.

In another implementation form of the first aspect, the quantum system comprises an underdamped resonator.

In another implementation form of the first aspect, the signal source is further configured to stop providing the driving signal to the qubit during a Rabi oscillation of the qubit and the underdamped resonator.

In another implementation form of the first aspect, the signal source is further configured to stop providing the driving signal to the qubit at a time when a Rabi oscillation of a probability of photon population transition from the lowest excited state of the qubit to the two-photon state of the quantum system is substantially at a maximum.

In another implementation form of the first aspect, the qubit comprises a superconducting qubit.

In another implementation form of the first aspect, the qubit comprises a charge qubit, a flux qubit, a split-Cooper-pair-box charge qubit, a unimon qubit, and/or a transmon qubit.

In another implementation form of the first aspect, the arrangement further comprises tunable environment and/or a readout line for dissipating photon population from the quantum system.

In another implementation form of the first aspect, the tunable environment comprises a quantum circuit refrigerator, QCR.

According to a second aspect, a quantum computing system comprises the arrangement according to the first aspect.

Many of the attendant features will be more readily appreciated as they become better understood by reference to the following detailed description considered in connection with the accompanying drawings.

## DESCRIPTION OF THE DRAWINGS

In the following, example embodiments are described in more detail with reference to the attached figures and drawings, in which:

Fig. 1 illustrates a schematic representation of an arrangement for qubit reset according to an embodiment;

Fig. 2 illustrates a schematic representation of energy levels of a qubit and of a quantum system according to an embodiment;

Fig. 3 illustrates a schematic representation of energy levels of the qubit according to an embodiment;

Fig. 4 illustrates a schematic representation of an arrangement for qubit reset according to an embodiment;

Fig. 5 illustrates a plot representation of simulation result according to an embodiment;

Fig. 6 illustrates a plot representation of simulation result according to another embodiment;

Fig. 7 illustrates a schematic representation of an arrangement for qubit reset according to another embodiment;

Fig. 8 illustrates a schematic representation of a quantum circuit refrigerator according to an embodiment;

Fig. 9 illustrates a circuit diagram representation of an arrangement for qubit reset according to an embodiment;

Fig. 10 illustrates a schematic representation of a quantum computing system according to an embodiment; and

Fig. 11 illustrates a schematic representation of a control unit according to an embodiment.

In the following, like reference numerals are used to designate like parts in the accompanying drawings.

## DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

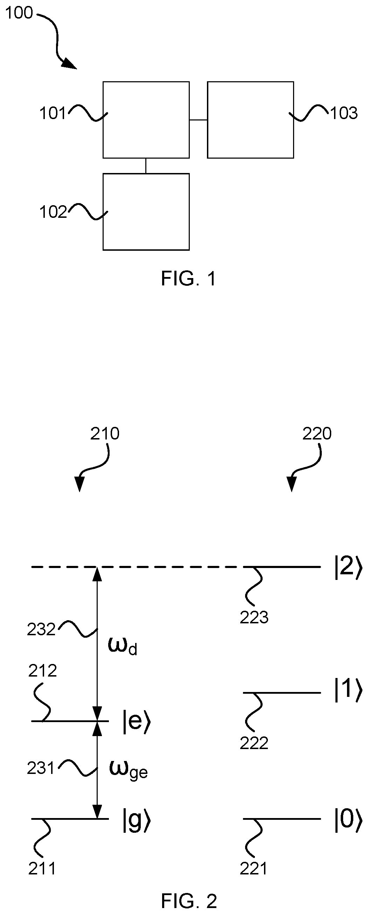

Fig. 1 illustrates a schematic representation of an arrangement for qubit reset according to an embodiment.

According to an embodiment, an arrangement 100 for qubit reset comprises a qubit 101 comprising at least a ground state and a lowest excited state.

The qubit 101 may comprise any type of qubit, such as those disclosed herein.

In some embodiments, the qubit 101 may comprise only two quantum states including the ground state and the lowest excited state. In other embodiments, the qubit 101 may comprise any number of quantum states including the ground state and the lowest excited state. For example, the qubit 101 may comprise any number of excited states.

Herein, a quantum state may also be referred to as a state, an energy state, an energy level, or similar.

The arrangement 100 may further comprise a quantum system 102 coupled to the qubit 101 and comprising a plurality of quantum states comprising at least a zero-photon state and a two-photon state.

The quantum system 102 may also be referred to as a connecting element, a resonator, or similar.

Herein, coupling of any components/parts may refer to, for example, electromagnetic coupling. Any electromagnetic coupling may be implemented as, for example, a galvanic coupling, an inductive coupling, a capacitive coupling, and/or any combination thereof.

In some embodiments, the quantum system 102 may comprise, for example, a resonator. The zero-photon state and the two-photon state may correspond to the zero-photon state and the two-photon state of the resonator. In other embodiments, the quantum system 102 may comprise, alternatively or additionally, other components/parts, such as those disclosed herein, and the zero-photon state and the two-photon state may correspond to the zero-photon state and the two-photon state of those components/parts. In some embodiments, quantum system 102 may comprise a larger composite quantum system comprising a plurality of components/parts and the zero-photon state and the two-photon state may correspond to eigen states of such a composite quantum system.

In some embodiments, the quantum system 102 can comprise a plurality of Fock quantum states comprising at least the zero-photon state, a one-photon state, and the two-photon state.

A Fock quantum state may refer to a quantum state corresponding to a well-defined number of particles, such as photons. For example, a n-photon state may refer to a Fock quantum state comprising n photons. Herein, a Fock quantum state may also be referred to as a Fock state, a number state, a number quantum state, or similar.

The arrangement 100 may further comprise a signal source 103 coupled to the qubit 101 and configured perform a qubit reset by providing a driving signal to the qubit 101, wherein a frequency of the driving signal substantially corresponds to an energy difference between the lowest excited state of the qubit 101 and the two-photon state of the quantum system 102.

The driving signal may comprise, for example, a microwave signal.

Herein, a qubit reset may refer to a process where the qubit 101 is caused to transition to a known quantum state, such as the ground state. With the driving signal, if the qubit 101 is in the lowest exited state or some other quantum state, such as a superposition of the ground state and the lowest excited state, the driving signal can cause the qubit 101 to transition to the ground state, thus resetting the qubit.

Herein, when referring to the order of states of, for example, qubit 101, using phrases such as "lowest", "second lowest", and "consecutive", these terms may refer to the order of the states in terms of energy. For example, the ground state of the qubit 101 may refer to a lowest state of the qubit 101 in terms of energy. Similarly, the lowest excited state may refer to an excited state with the lowest energy and so on.

Herein, any energy $E$, such as an energy difference between states, and a corresponding an angular frequency $\omega$ may be related by

$$E = \hbar\omega,$$

where $\hbar$ is the reduced Planck constant. Thus, when an angular frequency $\omega$ is disclosed herein, the corresponding energy $\hbar\omega$ is also disclosed. Similarly, when an energy $E$ is disclosed herein, a corresponding angular frequency $\omega = E/\hbar$ is also disclosed. Similarly, frequency $v$ correspond to the angular frequency via $v = \omega/(2\pi)$. Due to these relations between these quantities, terms such as frequency difference, angular frequency difference, and energy difference may be used interchangeably herein.

Although some embodiments may be disclosed herein with reference to a certain type of implementations of the quantum system 102. In any embodiment disclosed herein, the quantum system 102 may be implemented in various ways and using various technologies.

The arrangement 100 may be embodied in, for example, a quantum computing device. Such a quantum computing device may comprise a plurality of qubits for performing quantum computation. Each such qubit may be implemented using the arrangement 100.

The arrangement 100 may be realized, for example, in the superconducting circuit architecture.

According to an embodiment, the qubit 101 comprises a superconducting qubit.

According to an embodiment, the qubit 101 comprises a charge qubit, a flux qubit, a split-Cooper-pair-box charge qubit, a unimon qubit, and/or a transmon qubit.

According to an embodiment, the quantum system 102 comprises a lumped-element LC oscillator, a distributed-element LC oscillator, a waveguide resonator, a coplanar waveguide resonator, a half-wavelength resonator, a quarter-wavelength resonator, and/or a three-dimensional cavity resonator.

Fig. 2 illustrates a schematic representation of energy levels of a qubit and of a quantum system according to an embodiment.

In the embodiment of Fig. 2, energy levels 210 of the qubit 101 and energy levels 220 of the quantum system 102 are illustrated according to an embodiment. Although only a specific number of energy levels are illustrated in the embodiment of Fig. 2, the qubit 101 and/or the quantum system 102 may comprise any number of energy levels.

Each energy level illustrated in the embodiment of Fig. 2 may correspond to a quantum state. These quantum states are indicated for each energy level in the embodiment of Fig. 2. The energy level representation can be used to illustrate the relative energies of different quantum states. Herein, the terms "energy level" and "quantum state" may be used interchangeably.

In Fig. 2, the quantum system 102 comprises a zero-photon state 221, a one-photon state 222, and a two-photon state 223, denoted by $|0\rangle$, $|1\rangle$, and $|2\rangle$, respectively. The qubit 101 comprises a ground state $|g\rangle$ 211 and a lowest excited state $|e\rangle$ 212.

Angular frequency $\omega_{ge}$ corresponding to the energy difference 231 between the ground state $|g\rangle$ 211 and the lowest excited state $|e\rangle$ 212 of the qubit 101 may be referred to as the qubit frequency. The angular frequency $\omega_{ge}$ may also be noted by $\omega_q$.

The ground state $|g\rangle$ 211 and the lowest exited state $|e\rangle$ 212 may correspond to the computational basis of the qubit. For example, the ground state 211 may correspond to the $|0\rangle$ computational state of the qubit 101 and lowest exited state 212 may correspond to the $|1\rangle$ computational state of the qubit 101 or vice versa.

Angular frequency $\omega_d$ of the driving signal can substantially correspond to the energy difference 232 between the lowest excited state $|e\rangle$ 212 of the qubit 101 and the two-photon state $|2\rangle$ 223 of the quantum system 102. The angular frequency $\omega_d$ corresponds to an energy of $\hbar\omega_d$.

According to an embodiment, the driving signal is configured to cause photon population transition from the lowest excited state of the qubit 101 to the two-photon state of the quantum system 102.

Photon population transition may refer to a phenomenon where the driving signal causes photons to transition from the qubit 101 to the quantum system 102 due to the frequency of the driving signal substantially corresponding the energy difference 232 between the lowest excited state 212 of the qubit 101 and the two-photon state 223 of the quantum system 102.

The signal source 103 can reset the qubit 101 with the driving signal, such as a single microwave drive, targeted at the qubit 101 at a drive frequency $\omega_d = \omega_{g2} - \omega_{ge}$, where $\omega_{d2}$ is the angular frequency difference between the two-photon state $|2\rangle$ 223 of the quantum system 102 and the ground state $|g\rangle$ 211 of the qubit 101 and $\omega_{ge}$ is the angular frequency difference between the lowest excited state $|e\rangle$ 212 of the qubit 101 and the ground state $|g\rangle$ 211 of the qubit 101.

The states $|e0\rangle$ and $|g2\rangle$ can be connected in third order via the absorption of a photon by the qubit 101 and two exchange interactions between the qubit 101 and quantum system 102. Here, the first index refers to the state of the qubit 101 and the second index refers to the state of the quantum system 102. Hence, given that the energy conservation and selection rules are respected, a well-timed interaction can transfer photon population from $|e0\rangle$ to $|g2\rangle$. This transition can be considered to be a combination of the following transitions:

$$|e0\rangle \xrightarrow{\Omega} |f0\rangle \xrightarrow{g} |e1\rangle \xrightarrow{g} |g2\rangle,$$

$$|e0\rangle \xrightarrow{g} |g1\rangle \xrightarrow{\Omega} |e1\rangle \xrightarrow{g} |g2\rangle,$$

where $g$ refers to the coupling between the qubit 101 and the quantum system 102 and $\Omega$ refers to the drive caused by the driving signal.

The "red sideband" transition $|e0\rangle \rightarrow |g1\rangle$ can be parity-forbidden for single-photon drives, while the transition $|e0\rangle \rightarrow |g2\rangle$ can be allowed. Here, $|e0\rangle$ refers to a quantum state where the qubit 101 is in the lowest excited state and the quantum system 102 is in the zero-photon state, $|g1\rangle$ refers to a quantum state where the qubit 101 is in the ground state and the quantum system 102 is in the one-photon state, and $|g2\rangle$ refers to a quantum state where the qubit 101 is in the ground state and the quantum system 102 is in the two-photon state. This is due to the selection rules concerning quantum (an) harmonic oscillators whose states have definite parity. The selection rules are:

    1. matrix elements of odd operators between same-parity states vanish
    2. matrix elements of even operators between opposite-parity states vanish

Since the single-qubit drive Hamiltonian ($\propto \hat{b}^\dagger + \hat{b}$) is odd (it anti-commutes with the parity operator), it can cause transitions between states with opposite parity. Because the parity of $|e0\rangle$ is odd (it is eigenstate of the parity operator with eigenvalue -1) while $|g2\rangle$ is even (eigenstate of the parity operator with eigenvalue +1), single-photon transition between them is allowed.

Although only three states are illustrated in the embodiment of Fig. 2, the quantum system 102 may comprise any number of quantum states. For example, if the quantum system 102 is implemented using a harmonic oscillator, the quantum system 102 may comprise a theoretically infinite number of quantum states, wherein each state is an n-photon state.

According to an embodiment, the quantum system 102 comprises a substantially harmonic oscillator, a harmonic oscillator, a substantially anharmonic oscillator, or an anharmonic oscillator.

A harmonic oscillator may refer to a quantum system that can be modelled as having a plurality of quantum states that are equally spaced in terms of energy. A harmonic oscillator may also be referred to as a quantum harmonic oscillator, a linear oscillator, or similar.

A substantially harmonic oscillator may refer to a quantum system that can be modelled as having a plurality of quantum states that are substantially equally spaced in terms of energy.

An anharmonic oscillator may refer to a quantum system that can be modelled as having a plurality of quantum states that are non-equally spaced in terms of energy. The energy difference between consecutive state may follow, for example, a linear or non-linear function. An anharmonic oscillator may also be referred to as a quantum anharmonic oscillator or similar.

A substantially anharmonic oscillator may refer to a quantum system that can be modelled as having a plurality of quantum states that are substantially non-equally spaced in terms of energy. The energy difference between consecutive state may substantially follow, for example, a linear or non-linear function.

In some embodiments, the quantum system 102 may comprise a weakly anharmonic system. A weakly anharmonic system may refer to a quantum system in which a plurality of states can be populated using a single drive frequency. In a weakly anharmonic system, the deviations from the harmonic energy level structure with equidistant adjacent levels is so small that a drive in resonance with the fundamental frequency can excite the system higher up in energy similar to the harmonic oscillator, since the driving signal practically has a frequency band of finite width around the fundamental frequency. However, the small anharmonicity suppresses this leakage compared to the harmonic oscillator case, especially when the drive power is weak. This allows the use of weakly anharmonic oscillators as qubits. Transmon is an example of a weakly anharmonic oscillator. A weakly anharmonic system may be considered a substantially harmonic oscillator.

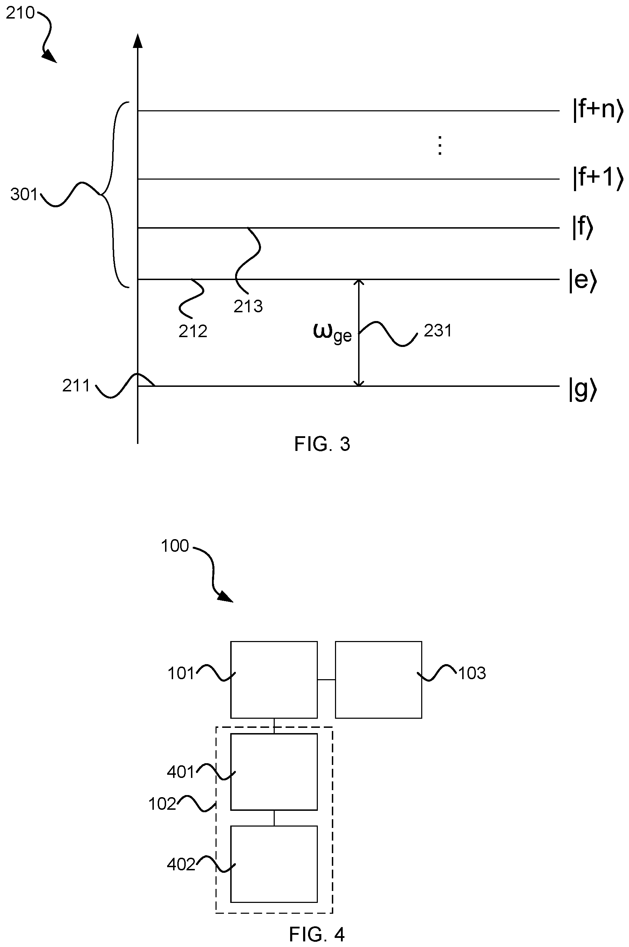

Fig. 3 illustrates a schematic representation of energy levels of the qubit according to an embodiment.

The qubit 101 can comprise one or more excited state 301. This may be referred to as a multi-level quantum system. The one or more excited states 301 can comprise the lowest excited state $|e\rangle$ 212.

In other embodiments, the qubit 101 may comprise only the ground state $|g\rangle$ 211 and the lowest excited state $|e\rangle$ 212. This may be referred to as two-level quantum system.

The one or more excited states 301 of the qubit may further comprise a second lowest excited state $|f\rangle$ 213. The second lowest excited state 213 has a higher energy than the ground state $|g\rangle$ 211 and the lowest excited state $|e\rangle$ 212.

Herein, any excited state in the one or more excited states 301 above the second lowest excited state $|f\rangle$ 213 may be denoted by $|f + k\rangle$, where $k$ refers to the position of the state above the second lowest excited state $|f\rangle$ 213. For example, the third lowest excited state may be denoted by $|f + 1\rangle$ and so on.

The one or more excited states 301 may comprise any number of excited states. In the embodiment of Fig. 3, four excited states are illustrated. However, as is denoted in Fig. 3, there may be any number of excited states between the state $|f + 1\rangle$ and the state $|f$

Fig. 4 illustrates a schematic representation of an arrangement for qubit reset according to an embodiment.

According to an embodiment, the quantum system 102 further comprises a Purcell filter configured to suppress photon population transition from the lowest excited state of the qubit 101 to states of the quantum system 102 other than the two-photon state.

Herein, a Purcell filter may also be referred to as a Purcell resonator, a Purcell filter resonator, or similar.

According to an embodiment, the quantum system 102 comprises a resonator and a Purcell filter, wherein the Purcell filter is configured to suppress photon population transition from the lowest excited state of the qubit 101 to states of the quantum system 102 other than the two-photon state. For example, in the embodiment of Fig. 4, the quantum system comprises a resonator 401 and a Purcell filter 402.

The resonator 401 can be coupled to the qubit and the Purcell filter 402 can be coupled to the resonator 401.

In embodiments where the quantum system 102 further comprises a Purcell filter 402, the zero-photon state and the two-photon state of the quantum system 102 may correspond to the zero-photon state and the two-photon state of the Purcell filter 402. In embodiments where the quantum system 102 further comprises a resonator 401 without a Purcell filter 402, the zero-photon state and the two-photon state of the quantum system 102 may correspond to the zero-photon state and the two-photon state of the resonator 401.

In some embodiments, the quantum system 102 further may comprises a resonator 401 and a Purcell filter 402 and the zero-photon state and the two-photon state of the quantum system 102 may correspond to the zero-photon state and the two-photon state of the resonator 401.

In some embodiments, the resonator 401 and the Purcell filter 402 may be hybridized and/or strongly hybridized. In such embodiments, the zero-photon state and the two-photon state of the quantum system 102 may correspond to the zero-photon state and the two-photon state of the hybridized system formed by the resonator 401 and the Purcell filter 402.

Hybridization may refer to a process where two quantum systems, such as the resonator 401 and the Purcell filter 402, combine to form a hybridized quantum system.

If the resonator 401 and the Purcell filter 402 are hybridized, the zero-photon state and the two-photon state may not be eigenstates of the resonator 401 or of the Purcell filter 402. Rather, they may be eigenstates of the hybridized system formed by the resonator 401 and the Purcell filter 402.

In the following, a coupling between a qubit and a resonator is analysed. For simplicity, the analysis considers a system of a qubit and a resonator without a Purcell filter or damping, such as damping caused by a readout line coupled to a Purcell filter. However, the reasoning given herein may also apply to embodiments comprising a resonator 401 and a Purcell filter 402, for example when the resonator 401 and the Purcell filter 402 are strongly hybridized. The reasoning may also apply when the system has damping such as damping caused by a readout line coupled to a Purcell filter.

In the following analysis, h = 1.

The analysis can be started with a Hamiltonian of coupled qubit and resonator with drive on the qubit. In the frame rotating at the drive frequency $\omega_d$ and the rotating-wave approximation (RWA) applied to both coupling and drive the Hamiltonian reads:

$$\hat{H} = \hat{H}_{JC} + \hat{H}_d$$

with

$$\hat{H}_{JC} = \delta_r \hat{a}^\dagger \hat{a} + \delta_q \hat{b}^\dagger \hat{b} + \frac{\alpha}{2} \hat{b}^\dagger \hat{b}^\dagger \hat{b} \hat{b} + g\left(\hat{a}\hat{b}^\dagger + \hat{a}^\dagger \hat{b}\right)$$

and

$$\hat{H}_d = \frac{\Omega(t)}{2}\left(e^{-\phi}\hat{b}^\dagger + e^{\phi}\hat{b}\right).$$

Where $\alpha$ is qubit anharmonicity, g is the qubit-resonator coupling, $\Omega(t)$ is the drive amplitude of the driving signal and $\phi$ is the phase of the driving signal, $\delta_q = \omega_q - \omega_d$ and $\delta_r = \omega_r - \omega_d$ are the qubit and resonator frequencies in the rotating frame, respectively, $\hat{a}$ and $\hat{a}^\dagger$ are the annihilation and creation operators of the resonator, respectively, and $\hat{b}$ and $\hat{b}^\dagger$ are the annihilation and creation operators of the qubit, respectively. For simplicity, time-independent amplitude or square pulse can be considered, $\Omega(t) = \Omega$. The Hamiltonian is valid in the transmon limit, $E_J/E_C \gg 1$, where $E_J$ is the Josephson energy of the Josephson junction of the qubit and $E_c$ is the capacitive energy of the qubit.

To calculate the effective coupling $\tilde{g}$ between the states $|e,0\rangle$ and $|g,2\rangle$, the Hamiltonian $\hat{H}$ can be expressed in the eigenbasis of $\hat{H}_{JC}$. In the dispersive regime, $\Delta = \omega_q - \omega_r \gg g$ this is the dressed basis $|i,j\rangle_D$.

The Jaynes-Cummings Hamiltonian $\tilde{H}_{JC}$ can be di-agonalized by treating the coupling term as a perturbation and solving the eigensystem to second order in perturbation theory. The relevant eigenstates become (these are not normalized)

$$|e, 0\rangle \rightarrow |e, 0\rangle_D = -\frac{g}{\Delta}|g, 1\rangle + \left(1 - \frac{g}{2\Delta^2}\right)|e, 0\rangle$$

$$|g, 2\rangle \rightarrow |g, 2\rangle_D = \left(1 - \frac{g^2}{\Delta^2}\right)|g, 2\rangle - \frac{\sqrt{2}g}{\Delta}|e, 1\rangle + \frac{2g^2}{(\alpha + 2\Delta)\Delta}|f, 0\rangle.$$

Next the drive Hamiltonian $\hat{H}_d$ can be rewritten in this eigenbasis as

$$\hat{H}_d = \sum_{ij,kl} \frac{\Omega}{2} \langle i, j|_D \left(e^{-\phi}\hat{b}^\dagger + e^{\phi}\hat{b}\right)|k, l\rangle_D |i, j\rangle_D \langle k, l|_D.$$

Now, matrix element $\tilde{g} = \langle g, 2|_D \hat{H}_d |e, 0\rangle_D$ can be calculated

$$\tilde{g} = \left\langle g, 2|_D \left( \Sigma_{ij,kl} \frac{\Omega}{2} \langle i, j|_D \left( e^{-\phi} \hat{b}^\dagger + e^{\phi} \hat{b} \right) |k, l\rangle_D |i, j\rangle_D \langle k, l|_D \right) \Big| e, 0 \right\rangle_D$$

$$= \sum_{ij,kl} \frac{\Omega}{2} \langle i, j|_D \left( e^{-\phi} \hat{b}^\dagger + e^{\phi} \hat{b} \right) |k, l\rangle_D \langle g, 2|i, j\rangle_D \langle k, l|e, 0\rangle_D$$

$$= \sum_{ij,kl} \frac{\Omega}{2} \langle i, j|_D \left( e^{-\phi} \hat{b}^\dagger + e^{\phi} \hat{b} \right) |k, l\rangle_D + \delta_{i,g} \delta_{2,j} \delta_{k,e} \delta_{l,0}$$

$$= \frac{\Omega}{2} \langle g, 2|_D \left( e^{-\phi} \hat{b}^\dagger + e^{\phi} \hat{b} \right) |e, 0\rangle_D.$$

The states $|e, 0\rangle_D$ and $|g, 2\rangle_D$ can be written as above to operate with the creation and annihilation operators

$$\tilde{g} = \frac{\Omega}{2} \left( \left( 1 - \frac{g^2}{\Delta^2} \right) \Big\langle g, 2 \Big| + \frac{\sqrt{2}g}{\Delta} \langle e, 1| + \frac{2g^2}{(\alpha + 2\Delta)\Delta} \langle f, 0| \right)$$

$$\times \left( e^{-\phi} \hat{b}^\dagger + e^{\phi} \hat{b} \right) \left( -\frac{g}{\Delta} |g, 1\rangle + \left( 1 - \frac{g^2}{2\Delta^2} \right) |e, 0\rangle \right)$$

$$= \frac{\Omega}{2} \left( -\frac{\sqrt{2}g^2 e^{-i\phi}}{\Delta^2} \langle e, 1|e, 1\rangle \right) + \left( \frac{2\sqrt{2}g^2 e^{-i\phi}}{(\alpha + 2\Delta)\Delta} - \frac{2\sqrt{2}g^4 e^{-i\phi}}{2\Delta^3(\alpha + 2\Delta)} \right) \langle f, 0|f, 0\rangle$$

Since this result was derived using second order perturbation theory, the $g^4$ term can be left out:

$$\tilde{g} = -\frac{\Omega \alpha g^2 e^{-i\phi}}{\sqrt{2}\Delta^2(2\Delta + \alpha)}.$$

This expression yields the intuition that the transition is of first order in the drive amplitude $\Omega$ and of second order in the coupling rate $g$. If the anharmonicity is zero, the transition may vanish: the two transition paths have opposite phase and they can interfere destructively. Larger anharmonicity can lead to a larger effective coupling rate $\tilde{g}$. Thus, at least one of the qubit 101 and the quantum system 102 may need to be anharmonic. If anharmonicity is zero, the transition from the lowest excited state of the qubit 101 to the two-photon state of the quantum system 102 may vanish.

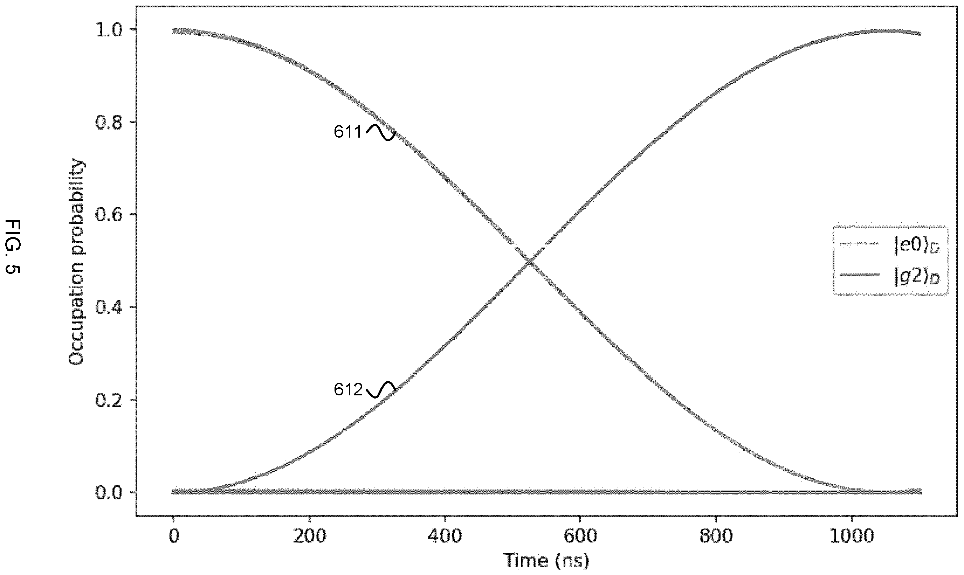

Fig. 5 illustrates a plot representation of simulation result according to an embodiment.

Fig. 5 illustrates the occupation probability of two quantum states as a function of time in an embodiment comprising a resonator in the quantum system 102.

Curve 611 correspond to the occupation probability of state $|e0\rangle_D$, where the qubit is in the excited state $|e\rangle$ and the resonator is in the zero-photon state $|0\rangle$. Curve 612 correspond to the occupation probability of state $|g2\rangle_D$, where the qubit is in the ground state $|g\rangle$ and the resonator is in the two-photon state $|2\rangle$. The occupation probability of other states can be negligible. Thus, their curves are not labelled in Fig. 5.

In the simulation of Fig. 5, the following parameters were used: 4.3 GHz qubit frequency, -0.25 GHz qubit anharmonicity, 5.2 GHz resonator frequency, 0.16 GHz qubit-resonator coupling, 6.1829 GHz drive frequency of the driving signal, and 0.1 GHz drive amplitude of the driving signal.

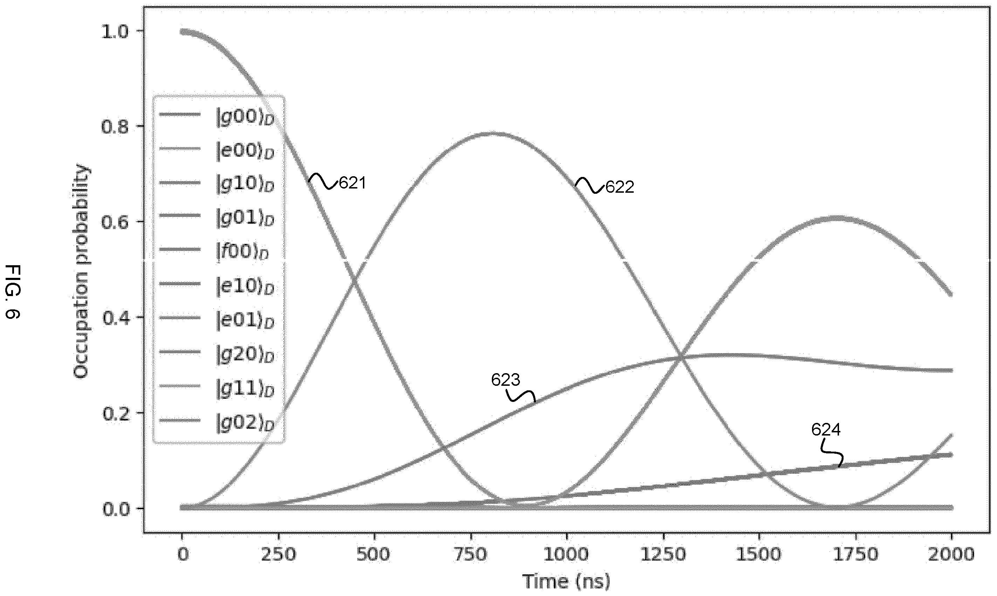

Fig. 6 illustrates a plot representation of simulation result according to another embodiment.

Fig. 6 illustrated the occupation probability of various quantum states as a function of time in an embodiment comprising a resonator and a Purcell filter in the quantum system 102 and the Purcell filter functions as an underdamped resonator with a damping rate

$$\kappa = 2\pi \times 0.5 \text{ MHz}.$$

Curve 621 correspond to the occupation probability of state $|e00\rangle_D$, where the qubit is in the excited state $|e\rangle$ and

the resonator and the Purcell filter are in their respective zero-photon $|0\rangle$ states. Curve 622 correspond to the occupation probability of state $|g02\rangle_D$, where the qubit is in the ground state $|g\rangle$, the resonator is in the zero-photon state $|0\rangle$, and the Purcell filter is in the two-photon state $|2\rangle$. Curve 623 correspond to the occupation probability of state $|g01\rangle_D$, where the qubit is in the ground state $|g\rangle$, the resonator is in the zero-photon state $|0\rangle$, and the Purcell filter is in the one-photon state $|1\rangle$. Curve 624 correspond to the occupation probability of state $|g00\rangle_D$, where the qubit is in the ground state $|g\rangle$ and the resonator and the Purcell filter are in their respective zero-photon $|0\rangle$ states. The occupation probability of other states can be negligible. Thus, their curves are not labelled in Fig. 6.

In the simulation of Fig. 6, the following parameters were used: 4.315 GHz qubit frequency, -0.25 GHz qubit anharmonicity, 5.177 GHz resonator frequency, 5.177 GHz Purcell filter frequency, 0.18 GHz qubit-resonator coupling, 0.013 GHz resonator - Purcell filter coupling, 6.1554 GHz drive frequency of the driving signal, and 0.1 GHz drive amplitude of the driving signal.

According to an embodiment, the quantum system 102 comprises an underdamped resonator.

The underdamped resonator can be implemented using, for example, the Purcell filter coupled to a readout line and/or coupled to the environment in some other manner.

Herein, a resonator can be underdamped when the qubit-resonator coupling $\tilde{g}$ is greater than the resonator damping coefficient $\kappa$. The resonator damping coefficient $\kappa$ may also be referred to as a linewidth of the resonator. The resonator can have a high quality factor, i.e. the internal damping can be negligible compared to the damping caused by the readout line coupled to the Purcell filter. When considering whether the resonator is underdamped, all damping should be taken into account. However, since the internal damping of the resonator is typically low, all of the damping may be considered to be caused by the external damping caused by the readout line.

According to an embodiment, the signal source 103 is further configured to stop providing the driving signal to the qubit 101 during a Rabi oscillation of the qubit 101 and the underdamped resonator.

Herein, a Rabi oscillation may refer to the oscillation of the occupation probabilities of the various quantum states in the arrangement 100. For example, Rabi oscillations can be observed in the example embodiment of Fig. 6 as the oscillations of the occupation probabilities 621 - 624.

By stopping providing the driving signal to the qubit 101 during a Rabi oscillation of the qubit 101 and the underdamped resonator, the coherent oscillations due to the driving signal can be stopped and the arrangement 100 can be left in the state in which it is when the driving signal is stopped.

According to an embodiment, the signal source 103 is further configured to stop providing the driving signal to the qubit 101 at a time when a Rabi oscillation of a probability of photon population transition from the lowest excited state of the qubit 101 to the two-photon state of the quantum system 102 is substantially at a maximum.

Herein, substantially at a maximum may refer to for example, at least 80 % of a maximum value, at least 85 % of a maximum value, at least 90 % of a maximum value, at least 95 % of a maximum value, at least 97.5 % of a maximum value, at least 99 % of maximum value, or 99.9 % of a maximum value.

For example, in the embodiment of Fig. 6, the maximum of the probability of the photon population transition from the lowest excited state of the qubit 101 to the two-photon state of the quantum system 102 is approximately 0.8 and is reached approximately at 800 ns. Thus, the signal source may stop providing the driving signal to the qubit 101 at a time window 750 - 850 ns, since this is when the occupation probability of the $|g02\rangle_D$ reaches a maximum.

By stopping providing the driving signal to the qubit 101 at a time when a Rabi oscillation of a probability of photon population transition from the lowest excited state of the qubit 101 to the two-photon state of the quantum system 102 is substantially at a maximum, the arrangement 100 can be left in a state where the photon population is probably transitioned to the quantum system 102 from the qubit 101. Thus, the qubit reset can be made faster since the qubit reset can be performed within, for example, one Rabi oscillation.

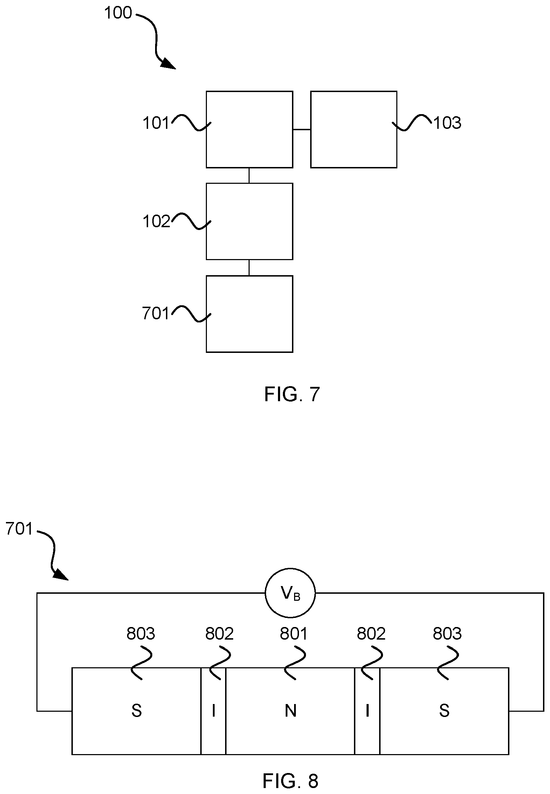

Fig. 7 illustrates a schematic representation of an arrangement for qubit reset according to another embodiment.

According to an embodiment, the arrangement 100 further comprises a tunable environment 701 and/or a readout line for dissipating photon population from the quantum system.

The readout line may also be referred to as a readout signal line or similar.

The tunable environment 701 and/or a readout line may be coupled to the quantum system 102.

In embodiments where the quantum system 102 comprises a resonator, the tunable environment and/or a readout line may be coupled to the resonator.

In embodiments where the quantum system 102 comprises a Purcell filter, the tunable environment and/or a readout line may be coupled to the Purcell filter.

The readout line may comprise, for example, any signal line that can used to dissipate photon energy from the quantum system 102.

The tunable environment may comprise any system that that can used to dissipate photon energy from the quantum system 102.

According to an embodiment, the tunable environment 701 comprises a quantum circuit refrigerator (QCR).

Fig. 8 illustrates a schematic representation of a quantum circuit refrigerator according to an embodiment.

A quantum circuit refrigerator (QCR) may comprise a superconductor 803 - insulator 802 - normal metal 801 - insulator 802 - superconductor 803 (SINIS) junction. The SINIS junction may be biased by a bias voltage $V_B$. The normal metal 801, also referred to as a metallic island, may be charged and discharged by controlling the bias voltage $V_B$ due to electron tunnelling across the insulating barriers 802. These tunnelling transitions may also involve absorption or emission of photons.

The quantum system 102 may be coupled to the normal metal 801 of the SINIS junction. Thus, the QCR may absorb photon energy from the quantum system 102.

According to an embodiment, the QCR is configured to dissipate photon energy transferred to the QCR via photon-assisted electron tunnelling in the SINIS junction.

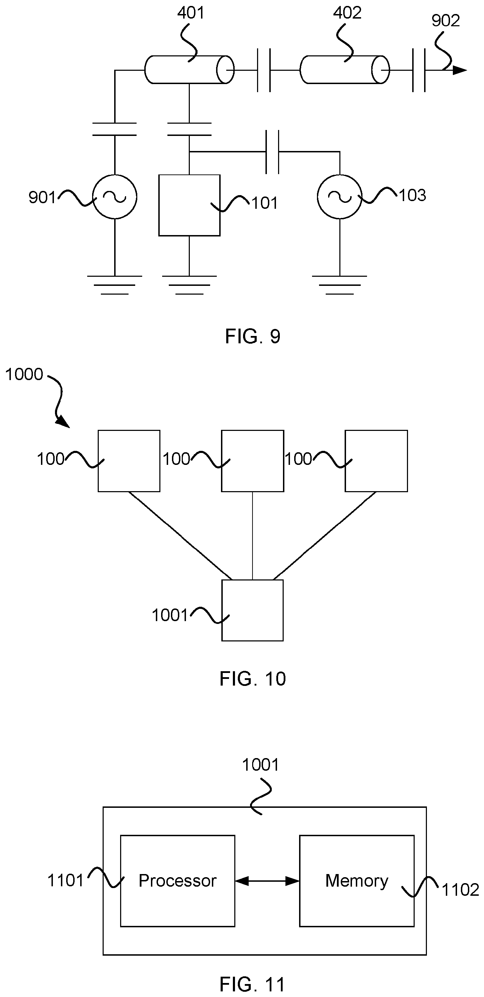

Fig. 9 illustrates a circuit diagram representation of an arrangement for qubit reset according to an embodiment.

It should be appreciated that the embodiment of Fig. 9 only illustrates one example implementation of the arrangement 100 using a lumped element model. Physically, the arrangement 100 can be implemented in various ways.

In the embodiment of Fig. 9, the signal source 103 is capacitively coupled to the qubit 101, the qubit is capacitively coupled to the resonator 401, and the resonator 401 is capacitively coupled to the Purcell filter 402. A second signal source 901 is capacitively coupled to the resonator 401. The Purcell filter 402 is capacitively coupled to a readout line 902. The Purcell filter 402 can be coupled to, for example, the tunable environment or any other environment via the readout line 902. The second signal source 901 may not be present in all embodiments. For example, the second signal source 901 may not be needed for qubit reset but may be used for qubit readout.

Fig. 10 illustrates a schematic representation of a quantum computing system according to an embodiment.

According to an embodiment, a quantum computing system 1000 comprises the arrangement 100.

For example, in the embodiment of Fig. 10, a quantum computing system 1000 comprises a plurality of arrangements 100. Each arrangement 100 can be coupled to a control unit 1001. The control unit 1001 can be configured to control each arrangement 100 in order to, for example, perform quantum computation. The control unit 1001 can be, for example, coupled to the signal source 103 of each arrangement 100 and configured to control the signal source 103 in each arrangement 100 in order to reset the qubit 101 in each arrangement.

For example, the ground state $|g\rangle$ 211 and the lowest excited state $|e\rangle$ 212 can be configured to form a computational basis of the qubit 101.

Although only three arrangements 100 are illustrated in the embodiment of Fig. 10, the quantum computing system 1000 can comprise any of number arrangements 100. For example, each qubit of the quantum computing system 1000 can be implemented using the arrangement 100. Thus, at least in some embodiments, the quantum computing system 1000 can comprise, for example, tens, hundreds, thousand, or millions of arrangements 100.

The quantum computing system 1000 may comprise coupling not illustrated in the embodiment of Fig. 10. For example, the qubit 101 in each arrangement may be coupled any number of other qubits 101. For example, the quantum computing system 100 may further comprise couplers between qubits 101 and the coupling between qubits 101 can be controlled via the couplers in order to perform quantum computation using the quantum computing system 100.

When the system 1000 is operational, each arrangement 100 may be physically located in a cryostat or similar. The cryostat may cool each arrangement 100 and other components of the system 1000 to cryogenic temperatures. This may be required if the arrangement 100 comprises, for example, superconducting components. The control unit 1001 may be physically located outside the cryostat.

Fig. 11 illustrates a schematic representation of a control unit according to an embodiment.

The control unit 1001 may comprise at least one processor 1101. The at least one processor 1101 may comprise, for example, one or more of various processing devices, such as a co-processor, a microprocessor, a control unit 1001, a digital signal processor (DSP), a processing circuitry with or without an accompanying DSP, or various other processing devices including integrated circuits such as, for example, an application specific integrated circuit (ASIC), a field programmable gate array (FPGA), a microprocessor unit (MCU), a hardware accelerator, a special-purpose computer chip, or the like.

The control unit 1001 may further comprise a memory 1102. The memory 1102 may be configured to store, for example, computer programs and the like. The memory 1102 may comprise one or more volatile memory devices, one or more non-volatile memory devices, and/or a combination of one or more volatile memory devices and non-volatile memory devices. For example, the memory 1102 may be embodied as magnetic storage devices (such as hard disk drives, floppy disks, magnetic tapes, etc.), optical magnetic storage devices, and semiconductor memories (such as mask ROM, PROM (programmable ROM), EPROM (erasable PROM), flash ROM, RAM (random access memory), etc.).

The control unit 1001 may further comprise other components not illustrated in the embodiment of Fig. 11. The control unit 1001 may comprise, for example, an input/output bus for connecting the control unit 1001 to each arrangement 100. Further, a user may control the control unit 1001 via the input/output bus. The user may, for example, control quantum computation operations performed by the system 1000 via the control unit 1001 and the input/output bus.

When the control unit 1001 is configured to implement some functionality, some component and/or components of the control unit 1001, such as the at least one processor 1102 and/or the memory 1102, may be configured to implement this functionality. Furthermore, when the at least one processor 1101 is configured to implement some functionality, this functionality may be implemented using program code comprised, for example, in the memory 1102.

The control unit 1001 may be implemented using, for example, a computer, some other computing device, or similar.

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate, insofar this falls within the scope of the appended claims. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification, insofar they fall within the scope of the appended claims.

**Claims**

1. An arrangement (100) for qubit reset, comprising:

   a qubit (101) comprising at least a ground state (211) and a lowest excited state (212);
   a quantum system (102) coupled to the qubit (101) and comprising a plurality of quantum states (220) comprising at least a zero-photon state (221) and a two-photon state (223); and
   a signal source (103) coupled to the qubit (101) and configured perform a qubit reset by providing a driving signal to the qubit (101),
   **characterised in that** a frequency of the driving signal substantially corresponds to an energy difference (232) between the lowest excited state (212) of the qubit (101) and the two-photon state (223) of the quantum system (102).

2. The arrangement (100) according to claim 1, wherein the driving signal is configured to cause photon population transition from the lowest excited state (212) of the qubit (101) to the two-photon state (223) of the quantum system (102).

3. The arrangement (100) according to claim 2, wherein the quantum system (102) further comprises a Purcell filter (402) configured to suppress photon population transition from the lowest excited state (212) of the qubit (101) to states of the quantum system (102) other than the two-photon state (223).

4. The arrangement (100) according to any preceding claim, wherein the quantum system (102) comprises a substantially harmonic oscillator, a harmonic oscillator, a substantially anharmonic oscillator, or an anharmonic oscillator.

5. The arrangement (100) according to any preceding claim, wherein the energy difference between the lowest excited state (212) of the qubit (101) and the two-photon state (223) of the quantum system (102) corresponds to a first frequency $\omega_0$, the frequency of the driving signal is $\omega_d$, a coupling strength between the qubit and the quantum system is $g$, and $|\omega_0 - \omega_d| \leq g$, $|\omega_0 - \omega_d| < g$, and/or $10 \times |\omega_0 - \omega_d| < g$.

6. The arrangement (100) according to any preceding claim, wherein the quantum system (101) comprises a lumped-element LC oscillator, a distributed-element LC oscillator, a waveguide resonator, a coplanar waveguide resonator, a half-wavelength resonator, a quarter-wavelength resonator, and/or a three-dimensional cavity resonator.

7. The arrangement (100) according to any preceding claim, wherein the quantum system (102) comprises an underdamped resonator.

8. The arrangement (100) according to claim 7, wherein the signal source (103) is further configured to stop providing the driving signal to the qubit (101) during a Rabi oscillation of the qubit (101) and the underdamped resonator.

9. The arrangement (100) according to claim 8, wherein the signal source (103) is further configured to stop providing the driving signal to the qubit (101) at a time when a Rabi oscillation of a probability of photon population transition from the lowest excited state (212) of the qubit (101) to the two-photon state (223) of the quantum system (102) is substantially at a maximum.

10. The arrangement (100) according to any preceding claim, wherein the qubit (101) comprises a superconducting qubit.

11. The arrangement (100) according to any preceding claim, wherein the qubit (101) comprises a charge qubit, a flux qubit, a split-Cooper-pair-box charge qubit, a unimon qubit, and/or a transmon qubit.

12. The arrangement (100) according to any preceding claim further comprising tunable environment (701) and/or a readout line for dissipating photon population from the quantum system (102).

13. The arrangement (100) according to claim 12, wherein the tunable environment (701) comprises a quantum circuit refrigerator, QCR.

14. A quantum computing system (1000) comprising the arrangement (100) according to any preceding claim.


**Patentansprüche**

1. Anordnung (100) für einen Qubit-Reset, umfassend:

   ein Qubit (101), umfassend zumindest einen Grundzustand (211) und einen niedrigsten angeregten Zustand (212);
   ein Quantensystem (102), das mit dem Qubit (101) gekoppelt ist und eine Mehrzahl von Quantenzuständen (220) umfasst, die zumindest einen Null-Photonen-Zustand (221) und einen Zwei-Photonen-Zustand (223) umfassen; und
   eine Signalquelle (103), die mit dem Qubit (101) gekoppelt ist und dazu konfiguriert ist, durch Bereitstellen eines Treibersignals an das Qubit (101) einen Qubit-Reset durchzuführen,
   **dadurch gekennzeichnet, dass** eine Frequenz des Treibersignals im Wesentlichen einer Energiedifferenz (232) zwischen dem niedrigsten angeregten Zustand (212) des Qubits (101) und dem Zwei-Photonen-Zustand (223) des Quantensystems (102) entspricht.

2. Anordnung (100) nach Anspruch 1, wobei das Treibersignal dazu konfiguriert ist, einen Photonenpopulationsübergang von dem niedrigsten angeregten Zustand (212) des Qubits (101) zu dem Zwei-Photonen-Zustand (223) des Quantensystems (102) zu bewirken.

3. Anordnung (100) nach Anspruch 2, wobei das Quantensystem (102) ferner ein Purcell-Filter (402) umfasst, das dazu konfiguriert ist, einen Photonenpopulationsübergang von dem niedrigsten angeregten Zustand (212) des Qubits (101) in andere Zustände des Quantensystems (102) als den Zwei-Photonen-Zustand (223) zu unterdrücken.

4. Anordnung (100) nach einem der vorhergehenden Ansprüche, wobei das Quantensystem (102) einen im Wesentlichen harmonischen Oszillator, einen harmonischen Oszillator, einen im Wesentlichen anharmonischen Oszillator oder einen anharmonischen Oszillator umfasst.

5. Anordnung (100) nach einem der vorhergehenden Ansprüche, wobei die Energiedifferenz zwischen dem niedrigsten angeregten Zustand (212) des Qubits (101) und dem Zwei-Photonen-Zustand (223) des Quantensystems (102) einer ersten Frequenz $\omega_0$ entspricht, die Frequenz des Treibersignals $\omega_d$ ist, eine Kopplungsstärke zwischen dem Qubit und dem Quantensystem $g$ ist, und $|\omega_0 - \omega_d| \leq g$, $|\omega_0 - \omega_d| < g$ und/oder $10 \times |\omega_0 - \omega_d| < g$ ist.

6. Anordnung (100) nach einem der vorhergehenden Ansprüche, wobei das Quantensystem (101) einen LC-Oszillator mit konzentrierten Elementen, einen LC-Oszillator mit verteilten Elementen, einen Wellenleiterresonator, einen koplanaren Wellenleiterresonator, einen Halbwellenlängenresonator, einen Viertelwellenlängenresonator und/oder einen dreidimensionalen Hohlraumresonator umfasst.

7. Anordnung (100) nach einem der vorhergehenden Ansprüche, wobei das Quantensystem (102) einen unterdämpften Resonator umfasst.

8. Anordnung (100) nach Anspruch 7, wobei die Signalquelle (103) ferner dazu konfiguriert ist, das Bereitstellen des Treibersignals an das Qubit (101) während einer Rabi-Oszillation des Qubits (101) und des unterdämpften Resonators zu stoppen.

9. Anordnung (100) nach Anspruch 8, wobei die Signalquelle (103) ferner dazu konfiguriert ist, das Bereitstellen des Treibersignals an das Qubit (101) zu einem Zeitpunkt zu stoppen, an dem eine Rabi-Oszillation einer Wahrscheinlichkeit eines Photonenpopulationsübergangs von dem niedrigsten angeregten Zustand (212) des Qubits (101) zu dem Zwei-Photonen-Zustand (223) des Quantensystems (102) im Wesentlichen auf einem Maximum liegt.

10. Anordnung (100) nach einem der vorhergehenden Ansprüche, wobei das Qubit (101) ein supraleitendes Qubit umfasst.

11. Anordnung (100) nach einem der vorhergehenden Ansprüche, wobei das Qubit (101) ein Ladungs-Qubit, ein Fluss-Qubit, ein Split-Cooper-Pair-Box-Ladungs-Qubit, ein Unimon-Qubit und/oder ein Transmon-Qubit umfasst.

12. Anordnung (100) nach einem der vorhergehenden Ansprüche, ferner umfassend eine abstimmbare Umgebung (701) und/oder eine Ausleseleitung zum Dissipieren von Photonenpopulation aus dem Quantensystem (102).

13. Anordnung (100) nach Anspruch 12, wobei die abstimmbare Umgebung (701) einen Quantenschaltkreis-Kühlschrank, QCR, umfasst.

14. Quantencomputersystem (1000), umfassend die Anordnung (100) nach einem der vorhergehenden Ansprüche.

## Revendications

1. Agencement (100) de réinitialisation de bits quantiques (qubit), comprenant :

   un bit quantique (101) comprenant au moins un état fondamental (211) et un état excité le plus bas (212) ;
   un système quantique (102) couplé au bit quantique (101) et comprenant une pluralité d'états quantiques (220) comprenant au moins un état à zéro photon (221) et un état à deux photons (223) ; et
   une source de signal (103) couplée au bit quantique (101) et configurée pour effectuer une réinitialisation de bits quantiques en fournissant un signal d'excitation au bit quantique (101), **caractérisé en ce qu'**une fréquence du signal d'excitation correspond sensiblement à une différence d'énergie (232) entre l'état excité le plus bas (212) du bit quantique (101) et l'état à deux photons (223) du système quantique (102).

2. Agencement (100) selon la revendication 1, dans lequel le signal d'excitation est configuré pour provoquer une transition de population photonique depuis l'état excité le plus bas (212) du bit quantique (101) jusqu'à l'état à deux photons (223) du système quantique (102).

3. Agencement (100) selon la revendication 2, dans lequel le système quantique (102) comprend en outre un filtre de Purcell (402) configuré pour supprimer une transition de population photonique depuis l'état excité le plus bas (212) du bit quantique (101) vers des états du système quantique (102) autres que l'état à deux photons (223).

4. Agencement (100) selon une quelconque revendication précédente, dans lequel le système quantique (102) comprend un oscillateur sensiblement harmonique, un oscillateur harmonique, un oscillateur sensiblement anharmonique, ou un oscillateur anharmonique.

5.  Agencement (100) selon une quelconque revendication précédente, dans lequel la différence d'énergie entre l'état excité le plus bas (212) du bit quantique (101) et l'état à deux photons (223) du système quantique (102) correspond à une première fréquence $\omega_0$, la fréquence du signal d'excitation est $\omega_d$, une force de couplage entre le bit quantique et le système quantique est $g$, et $|\omega_0^- \omega_d| \leq g$, $|\omega_{0-} \omega_d| < g$, et/ou 10x $|\omega_{0-} \omega_d| < g$.

6.  Agencement (100) selon une quelconque revendication précédente, dans lequel le système quantique (101) comprend un oscillateur LC à éléments localisés, un oscillateur LC à éléments distribués, un résonateur à guide d'ondes, un résonateur à guide d'ondes coplanaire, un résonateur à demi-longueur d'onde, un résonateur à quart de longueur d'onde et/ou un résonateur à cavité tridimensionnelle.

7.  Agencement (100) selon une quelconque revendication précédente, dans lequel le système quantique (102) comprend un résonateur sous-amorti.

8.  Agencement (100) selon la revendication 7, dans lequel la source de signal (103) est en outre configurée pour cesser de fournir le signal d'excitation au bit quantique (101) pendant une oscillation de Rabi du bit quantique (101) et du résonateur sous-amorti.

9.  Agencement (100) selon la revendication 8, dans lequel la source de signal (103) est en outre configurée pour cesser de fournir le signal d'excitation au bit quantique (101) à un moment où une oscillation de Rabi d'une probabilité de transition de population photonique depuis l'état excité le plus bas (212) du bit quantique (101) vers l'état à deux photons (223) du système quantique (102) est sensiblement maximale.

10. Agencement (100) selon une quelconque revendication précédente, dans lequel le bit quantique (101) comprend un bit quantique supraconducteur.

11. Agencement (100) selon une quelconque revendication précédente, dans lequel le bit quantique (101) comprend un bit quantique de charge, un bit quantique de flux, un bit quantique de charge de boîte à paire de Cooper split, un bit quantique unimon et/ou un bit quantique transmon.

12. Agencement (100) selon une quelconque revendication précédente comprenant en outre un environnement accordable (701) et/ou une ligne de lecture pour dissiper la population photonique du système quantique (102).

13. Agencement (100) selon la revendication 12, dans lequel l'environnement accordable (701) comprend un réfrigérateur de circuit quantique, QCR.

14. Système de calcul quantique (1000) comprenant l'agencement (100) selon une quelconque revendication précédente.

100

101

103

102

FIG. 1

210

220

$\omega_d$

232

212

$|e\rangle$

231

$\omega_{ge}$

$|g\rangle$

211

$|2\rangle$

223

$|1\rangle$

222

$|0\rangle$

221

FIG. 2

210

301

$|f+n\rangle$

$|f+1\rangle$

$|f\rangle$

$|e\rangle$

213

212

$\omega_{ge}$   231

211

$|g\rangle$

FIG. 3

100

101   103

401

102

402

FIG. 4

FIG. 5

FIG. 6

100

101 102 103

701

**FIG. 7**

701

$V_B$

803 802 801 802 803

S I N I S

**FIG. 8**

FIG. 9

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. TEIXEIRA et al.** Many-excitation removal of a transmon qubit using a single-junction quantum-circuit refrigerator and a two-tone microwave drive. *arXiv:2401.14912v1*, 2024